(19) Europäisches Patentamt
European Patent Office
Office européen des brevets

(11) **EP 3 179 421 A1**

(12) **DEMANDE DE BREVET EUROPEEN**

(43) Date de publication:
**14.06.2017 Bulletin 2017/24**

(51) Int Cl.:
***G06Q 10/06*** *(2012.01)*   ***B60L 11/18*** *(2006.01)*
***H02J 7/00*** *(2006.01)*

(21) Numéro de dépôt: **16198602.1**

(22) Date de dépôt: **14.11.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **10.12.2015 FR 1562113**

(71) Demandeur: **Schneider Electric Industries SAS 92500 Rueil-Malmaison (FR)**

(72) Inventeurs:
• **PFLAUM, Peter**
  **38050 Grenoble Cedex 09 (FR)**
• **ALAMIR, Mazen**
  **3850 Grenoble Cedex 09 (FR)**

(74) Mandataire: **Tripodi, Paul**
  **Schneider Electric Industries SAS**
  **Service Propriété Industrielle**
  **World Trade Center / 38EE1**
  **5 Place Robert Schuman**
  **38050 Grenoble Cedex 09 (FR)**

(54) **PROCÉDÉ DE GESTION EN ÉNERGIE D'UNE STATION DE RECHARGE DE VÉHICULES ÉLECTRIQUES**

(57) L'invention concerne un procédé de gestion en énergie d'une station de recharge (1) de véhicules électriques (VE), ladite station de recharge comportant plusieurs bornes de recharge (Bx), ledit procédé permettant de prédire le plus précisément possible la consommation d'une station de recharge électrique, tout en garantissant la satisfaction des clients.

Le procédé consiste notamment à :
- déterminer un modèle statistique (Lstat) d'occupation de ladite station (1),
- déterminer des scenarii (SC) d'occupation de la station de recharge répondant audit modèle statistique d'occupation déterminé,
- déterminer, pour chaque profil de puissance parmi plusieurs profils de puissance appliqués, les scenarii d'occupation valables et les scenarii d'occupation non valables en tenant compte d'un taux de satisfaction,
- sélectionner un profil de puissance optimal (Pmax_opt) parmi les profils de puissance (Pmax_y) pour lesquels le nombre de scenarii d'occupation non-valables ne dépasse pas un seuil (m) prédéfini.

Fig. 1

## Description

## Domaine technique de l'invention

La présente invention se rapporte à un procédé de gestion en énergie d'une station de recharge de véhicules électriques. L'invention concerne également le système qui permet de mettre en oeuvre ledit procédé.

## Etat de la technique

Le réseau électrique n'est pas encore adapté pour gérer la charge des véhicules électriques. Aujourd'hui, le nombre de véhicules présents étant encore faible, il n'est pas forcément nécessaire de prévoir la puissance à affecter à une station de recharge. Cependant, la progression du nombre de véhicules électriques l'émergence de contraintes en matière de consommation d'énergie électrique pourraient nécessiter d'anticiper le besoin en énergie d'une station de recharge de véhicule électrique et une meilleure maîtrise de sa consommation d'énergie.
Des solutions ont déjà été proposées pour prévoir le besoin en énergie d'une station de recharge. De telles solutions ont par exemple été décrites dans les documents référencés CN104064829A**,** CN103400203A**,** CN202256537U**,** US8232763B1**.**

Les différentes solutions proposées ne sont pas satisfaisantes, car souvent peu précises et inadaptées aux incertitudes liées au niveau d'occupation de la station de recharge et à la variation de ce niveau d'occupation au cours d'une journée. En effet, pour une station de recharge, on ne connaît pas à l'avance le moment où un véhicule se connecte pour être rechargé et le moment où ce véhicule va repartir après une durée de charge déterminée.

Le but de l'invention est de proposer un procédé de gestion d'une station de recharge de véhicules électriques permettant de prévoir de manière précise un profil de consommation de la station afin que le gestionnaire du réseau d'alimentation puisse anticiper de manière optimale la demande en énergie électrique. Le procédé de l'invention permet notamment de tenir compte de la nature stochastique du niveau d'occupation de chaque borne de recharge de la station au cours d'une journée.

## Exposé de l'invention

Ce but est atteint par un procédé de gestion en énergie d'une station de recharge de véhicules électriques, ladite station de recharge comportant plusieurs bornes de recharge, ledit procédé comportant les étapes suivantes :

- Détermination pour la station de recharge d'un modèle statistique d'occupation de ladite station,
- Détermination de scenarii d'occupation de la station de recharge répondant audit modèle statistique d'occupation déterminé,
- Détermination de plusieurs profils de puissance à appliquer à la station de recharge, chaque profil de puissance étant échantillonné sur plusieurs plages horaires successives d'une période temporelle prédéfinie,
- Application de chaque profil de puissance à chaque scenario d'occupation identifié, en répartissant la puissance disponible à chaque plage horaire du profil de puissance sur les véhicules électriques connectés à la station de recharge sur ladite plage horaire,
- Pour chaque profil de puissance appliqué à un scénario d'occupation déterminé, comparaison d'un taux de satisfaction obtenu par rapport à un seuil prédéfini, ledit taux de satisfaction étant déterminé en tenant compte d'un niveau de charge final obtenu et d'une durée de connexion de chaque véhicule électrique en vue d'une recharge, en vue de déterminer si le scénario d'occupation est valable,
- Sélection d'un profil de puissance optimal parmi les profils de puissance pour lesquels le nombre de scenarii d'occupation non-valables ne dépasse pas un seuil prédéfini.

Selon une particularité du procédé de l'invention, la puissance disponible est répartie de manière égale à tous les véhicules électriques connectés.

Selon une autre particularité, la puissance disponible est répartie en tenant compte de la durée de connexion de chaque véhicule électrique.

Selon une autre particularité, chaque profil de puissance est défini à partir d'un jeu de paramètres de dimension déterminée.

Selon une autre particularité, la sélection du profil de puissance est réalisée en tenant compte d'un indice de performance.

Selon une autre particularité, l'indice de performance est lié à une minimisation de l'erreur de prédiction de consommation.

Selon une autre particularité, l'indice de performance est lié à la limitation de l'amplitude maximale du profil de puissance.

L'invention concerne également un système de gestion en énergie d'une station de recharge de véhicules électriques, ladite station de recharge comportant plusieurs bornes de recharge, ledit système comportant :

- Un module de détermination pour la station de recharge d'un modèle statistique d'occupation de ladite station,
- Un module de détermination de scenarii d'occupation de la station de recharge répondant audit modèle statistique d'occupation déterminé,
- Un module de détermination de plusieurs profils de puissance à appliquer à la station de recharge, chaque profil de puissance étant échantillonné sur plusieurs plages horaires successives d'une période temporelle prédéfinie,

- Un module d'application de chaque profil de puissance à chaque scenario d'occupation identifié, en répartissant la puissance disponible à chaque plage horaire du profil de puissance sur les véhicules électriques connectés à la station de recharge sur ladite plage horaire,

- Pour chaque profil de puissance appliqué à un scénario d'occupation déterminé, un module de comparaison d'un taux de satisfaction obtenu par rapport à un seuil prédéfini, ledit taux de satisfaction étant déterminé en tenant compte d'un niveau de charge final obtenu et d'une durée de connexion de chaque véhicule électrique en vue d'une recharge, en vue de déterminer si le scénario d'occupation est valable,

- Un module de sélection d'un profil de puissance optimal choisi parmi les profils de puissance pour lesquels le nombre de scénarios non-valables ne dépasse pas un seuil prédéfini.

## Brève description des figures

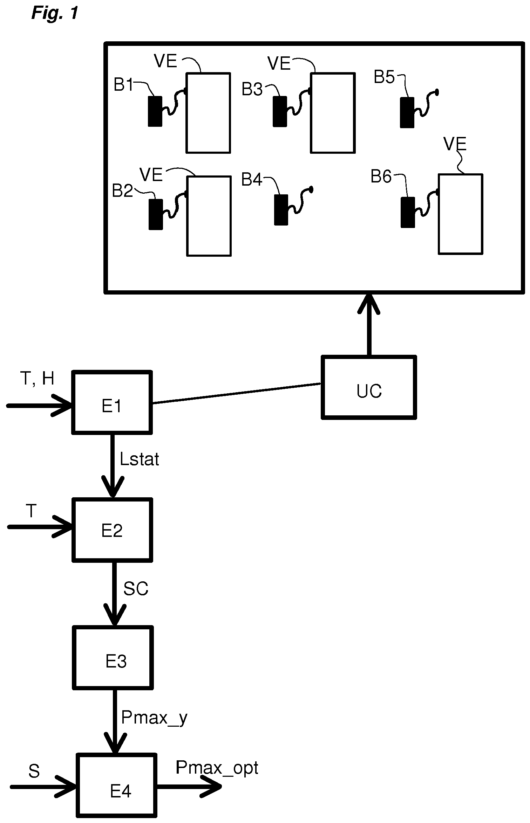

D'autres caractéristiques et avantages vont apparaître dans la description détaillée qui suit faite en regard des dessins annexés dans lesquels :la figure 1 représente de manière schématique l'algorithme du procédé de gestion de l'invention,

- la figure 2 permet d'illustrer le principe de satisfaction du client employé dans le procédé de gestion de l'invention,
- la figure 3 représente un exemple de profil de puissance qu'il est possible d'appliquer dans le procédé de gestion de l'invention.

## Description détaillée d'au moins un mode de réalisation

L'invention vise à proposer un procédé de gestion d'une station de recharge 1 de véhicules électriques VE, la station de recharge comportant plusieurs bornes de recharge Bx (x allant de 1 à n selon la taille de la station-sur la figure 1, x=6) distinctes. Les bornes de recharge Bx pourront être situées dans un même lieu ou dispersées. La station de recharge est alimentée par un réseau électrique.

L'objectif du procédé de l'invention est de prévoir la puissance nécessaire à une station de recharge 1 pour fonctionner sur une période de temps T déterminée. Dans la suite de la description, nous considérerons une période de temps T d'une journée (de minuit à minuit) mais il faut comprendre que l'invention pourra s'appliquer pour une période de temps différente. La période de temps T choisie sera par exemple divisée en plusieurs plages horaires successives de durée égale. La journée sera ainsi divisée en plusieurs plages successives de quinze minutes. Bien entendu, selon l'application envisagée, une autre division pourrait être imaginée.

Le procédé de l'invention consiste à mettre en oeuvre un algorithme comportant plusieurs étapes. Le procédé de gestion est par exemple mis en oeuvre par un système de gestion comportant au moins une unité de traitement UC. Les étapes du procédé seront par exemple mises en oeuvre par un ou plusieurs modules logiciels exécutés par l'unité de traitement UC.

Les étapes du procédé de gestion de l'invention sont décrites ci-après. Elles sont mises en oeuvre dans le but de déterminer un profil de puissance Pmax_opt à appliquer à une station de recharge de véhicules électriques qui tient compte des incertitudes liées au niveau d'occupation de la station de recharge 1, tout en respectant un degré de satisfaction des clients déterminé.

Une première étape E1 du procédé consiste à déterminer les lois statistiques qui décrivent l'occupation de la station de recharge.

Pour chaque borne de recharge de la station, il s'agit de construire un modèle statistique de son occupation qui comporte, pour chaque véhicule qui se connecte à la borne, les informations suivantes :

- instant de connexion au réseau du véhicule,

- instant de déconnexion du réseau pour le véhicule,

- quantité d'énergie demandée par le véhicule lors de sa connexion.

Toutes ces informations n'étant pas connues en temps réel, elles suivent tout de même certaines lois statistiques connues, telles que par exemple des lois gaussiennes.

Préférentiellement, la détermination des lois statistiques qui décrivent l'occupation des bornes de recharge de la station de recharge sur une journée est réalisée à partir des données d'historique H mémorisées et disponibles. Une période d'apprentissage est mise en place sur une durée suffisante pour déterminer la variation d'occupation de la station de recharge. La période d'apprentissage peut s'appliquer à chaque borne de recharge ou à l'ensemble des bornes de recharge de la station.

Suite à cette procédure d'apprentissage, l'unité de traitement détermine la loi statistique d'occupation suivie par chaque borne de recharge de la station. Pour la suite de la description du procédé de gestion de l'invention, on considérera que l'occupation de chaque borne Bx de la station de recharge suit une même loi statistique, désignée Lstat.

Une fois la loi statistique Lstat identifiée pour chaque borne de recharge de la station, le procédé de gestion de l'invention met en oeuvre une deuxième étape E2 qui consiste à générer les scénarii SC d'occupation de la station de recharge 1 sur la période T choisie, c'est-à-dire sur la journée.

Les scénarii SC générés sont ceux qui permettent de répondre à la loi statistique Lstat déterminée pour chaque borne. Chaque scénario SC comporte le niveau d'occupation de la station sur chaque plage horaire de la journée, ce niveau d'occupation étant déterminé à partir de l'instant de connexion et de l'instant de déconnexion de chaque véhicule et l'état de charge initial de chaque véhicule se connectant à la station sur la journée, issue de la loi statistique Lstat.

Chaque scénario SC sélectionné doit répondre à un critère lié à la probabilité de garantie de la satisfaction des clients. Le nombre N de scenarii SC sélectionné est déterminé à l'aide d'algorithmes probabilistes (« randomized algorithms ») suivant la formule suivante :

$$N \geq \frac{1}{\eta} (\frac{e}{e-1})(\ln \frac{n_\theta}{\delta} + m)$$

Cette relation correspond au nombre N de scenarii qui permettent d'obtenir des performances garanties, ces performances garanties étant définies par les paramètres suivants :

- $\eta$ correspond à un paramètre stochastique représentant la probabilité que, pour un scénario donné, la stratégie de recharge ne rencontre pas de succès, c'est-à-dire qu'il représente la probabilité de non-satisfaction du client,

- $\delta$ correspond à un paramètre stochastique représentant le degré de confiance (défini par 1-$\delta$) accordé à la probabilité de non-satisfaction du client définie par $\eta$,

- m correspond à un seuil de sélection d'un profil de puissance Pmax_y (voir ci-après), ce seuil étant le nombre de scenarii pour lesquels on accepte que le taux de clients satisfaits ne soit pas supérieur à un seuil déterminé,

- $n_\Theta$ représente la cardinalité d'un jeu de paramètres, décrit ci-dessous.

Les deux paramètres $\eta$ et $\delta$ sont ainsi liés à la probabilité de garantie de la satisfaction des clients.

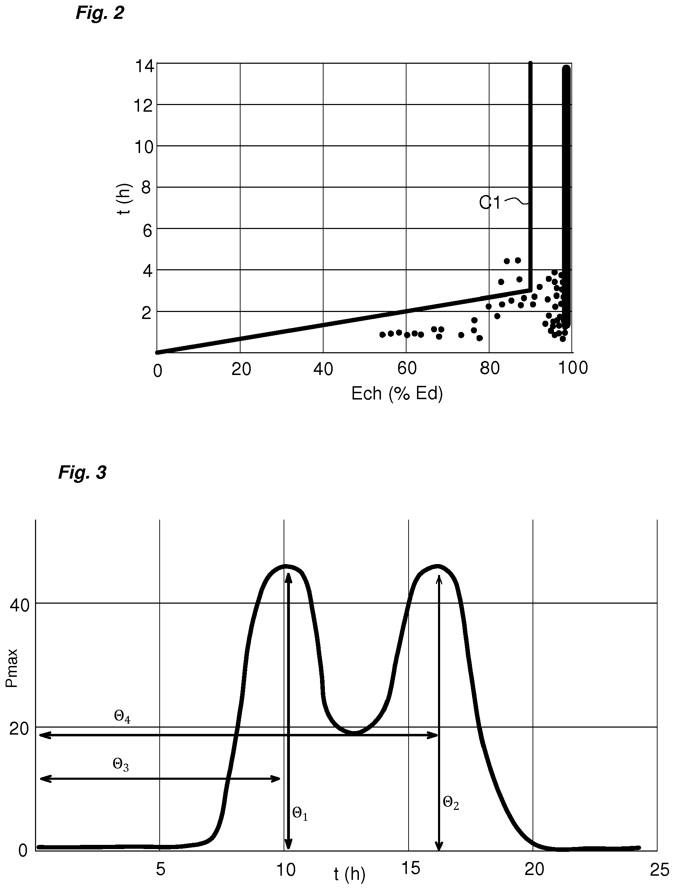

La figure 2 permet d'illustrer le principe de satisfaction d'un client. Un client sera considéré comme satisfait si son véhicule a été chargé suffisamment par rapport à la demande initiale de charge. Ainsi, un scénario d'occupation de la station de recharge sera considéré comme valable si, à la fin de la journée, le taux de clients satisfaits au sens de la définition ci-dessus est supérieur à un seuil déterminé.

La figure 2 représente en abscisse, exprimé en pourcents, le rapport entre l'énergie Ech obtenue sur la durée de charge du véhicule et l'énergie demandée Ed lors de la connexion et en ordonnée, la durée t (exprimée en heures) de connexion du véhicule. Chaque point correspond ainsi au niveau de charge d'un véhicule obtenu à l'issue de sa période de connexion par rapport au niveau de charge demandé au moment de la connexion. On comprend que plus le véhicule reste longtemps en charge, plus le pourcentage est élevé. Sur cette figure 2, la courbe C1 représente la limite de satisfaction appliquée. Cette limite de satisfaction correspond aux seuils S de charge à partir desquels les clients seront satisfaits en fonction d'une durée de charge appliquée.

A partir des scenarii d'occupation de la station de recharge, l'unité de traitement détermine ensuite, dans une troisième étape E3, les profils de puissance Pmax_y, avec y allant de 1 à n, n correspondant au nombre de profils qui permettent de répondre aux scenarii SC identifiés.

Les profils de puissance Pmax_y sont par exemple définis à partir d'un paramètre multidimensionnel. La dimension du paramètre doit être la plus petite possible mais elle doit être suffisante pour obtenir un profil ayant une variabilité suffisante pour que celui-ci représente au mieux le profil de la consommation réelle de la station de recharge 1 sur la journée (T).

La figure 3 représente un exemple de profil de puissance Pmax_y applicable sur une journée. On voit sur cette figure que ce profil peut être défini à partir d'un jeu de paramètres $\Theta$ ayant une dimension n=4. Pour limiter le nombre de profils Pmax_y à parcourir par l'algorithme, un ensemble discret (ayant la cardinalité $n_\Theta$) de valeurs possibles pour le paramètre multidimensionnel doit être choisi. Pour le profil représenté, on a par exemple :

$$\Theta\_1 = \{0.7, 0.9, 1.1\}$$

$$\Theta\_2 = \{0.7, 0.9, 1.1\}$$

$$\Theta\_3 = \{0.9, 1.0, 1.1\}$$

$$\Theta\_4 = \{0.9, 1.0, 1.1\}$$

La cardinalité $n_\Theta$ de ce jeu de paramètres serait alors $n_\Theta = 3^4 = 81$

Dans une quatrième étape E4, l'unité de traitement UC détermine le profil de puissance Pmax_opt qui répondra au mieux aux scenarii SC d'occupation identifiés à l'étape E2, l'unité de traitement UC procède de la manière suivante :

- Elle sélectionne un profil de puissance en fixant un jeu de paramètre $\Theta$ comme décrit ci-dessus.

- Pour chaque scénario SC d'occupation de la station de recharge 1, l'unité de traitement UC distribue la puissance définie par le profil sélectionné suivant le découpage temporel employé. Comme décrit ci-dessus, la journée a par exemple été découpée en plages successives de quinze minutes. Sur chaque plage horaire de quinze minutes, la puissance disponible définie par le profil est distribuée aux différentes bornes de recharge Bx de la station. Préférentiellement, l'unité de traitement UC détermine la puissance distribuée à chaque borne de recharge en procédant de la manière suivante, pour chaque plage horaire :

- l'unité de traitement détermine le nombre de véhicules connectés et divise la puissance disponible définie par le profil de puissance sélectionné sur la période temporelle par le nombre de véhicule,

- si certains véhicules présentent un état de charge suffisamment élevé qu'ils n'ont pas besoin de la quantité de puissance qui leur a été attribuée, l'unité de traitement effectue une nouvelle répartition de la puissance en hiérarchisant les véhicules par leur durée de connexion à une borne de recharge.

- Une fois que l'unité de traitement UC a appliqué le profil de puissance sélectionné à chaque scénario, elle détermine les scenarii valables, c'est-à-dire ceux pour lesquels le taux de clients satisfaits est supérieur à un seuil prédéfini. Un client est considéré être satisfait si, à l'issue de sa durée de connexion, le niveau de charge (Ech) de son véhicule dépasse le seuil S défini par la courbe C1 de la figure 2 (c'est-à-dire si son point est situé à droite de la courbe C1).

- Si le nombre de scenarii non-valables ne dépasse pas le seuil m défini ci-dessus, le profil de puissance sélectionné est considéré comme répondant aux scenarii SC.

- L'unité de traitement Uc recommence ces opérations pour les 81 profils de puissance correspondant à la cardinalité du jeu de paramètres Θ ayant une dimension n=4.

- L'unité de traitement UC choisit ensuite le profil de puissance optimal Pmax_opt parmi tous les profils de puissance testés par l'unité de traitement UC et validés lors de l'étape précédente. Le choix du profil de puissance optimal Pmax_opt est par exemple réalisé en tenant compte d'un indice de performance. Cet indice de performance pourra être différent selon l'application. Ci-dessous, deux exemples différents d'indice de performance qui peuvent être appliqués dans le choix du profil de puissance :

- Minimisation de l'erreur de prédiction. En tenant compte de cet indice, l'unité de traitement UC détermine le profil de puissance qui collera au plus près de la consommation réelle.

- Minimisation des pics de consommation. En tenant compte de cet indice, l'unité de traitement choisit le profil de puissance pour lequel l'amplitude maximale est la plus faible.

La solution de l'invention présente ainsi de nombreux avantages parmi lesquels :

- Une grande précision de la prédiction de la courbe de charge (Pmax_opt) par rapport à d'autres solutions existantes, car elle tient compte notamment du niveau d'occupation de la station sur chaque plage horaire de la journée,

- Une satisfaction des clients qui est garantie, selon la limite de satisfaction définie,

- Une grande souplesse car la stratégie de recharge peut s'adapter à différentes contraintes, celles liées à la satisfaction du client, liées à l'opérateur de gestion du réseau électrique, ou au gestionnaire de la station.

## Revendications

1. Procédé de gestion en énergie d'une station de recharge (1) de véhicules électriques (VE), ladite station de recharge comportant plusieurs bornes de recharge (Bx), ledit procédé étant **caractérisé en ce qu'**il comporte les étapes suivantes :

   - Détermination pour la station de recharge (1) d'un modèle statistique (Lstat) d'occupation de ladite station (1),
   - Détermination de scenarii (SC) d'occupation de la station de recharge répondant audit modèle statistique d'occupation déterminé,
   - Détermination de plusieurs profils de puissance (Pmax_y) à appliquer à la station de recharge (1), chaque profil de puissance étant échantillonné sur plusieurs plages horaires successives d'une période temporelle (T) prédéfinie,
   - Application de chaque profil de puissance (Pmax_y) à chaque scenario (SC) d'occupation identifié, en répartissant la puissance disponible à chaque plage horaire du profil de puissance sur les véhicules électriques (VE) connectés à la station de recharge (1) sur ladite plage horaire,

- Pour chaque profil de puissance (Pmax_y) appliqué à un scénario d'occupation déterminé, comparaison d'un taux de satisfaction obtenu par rapport à un seuil (S) prédéfini, ledit taux de satisfaction étant déterminé en tenant compte d'un niveau de charge final obtenu et d'une durée de connexion de chaque véhicule électrique (VE) en vue d'une recharge, en vue de déterminer si le scénario d'occupation est valable,
- Sélection d'un profil de puissance optimal (Pmax_opt) parmi les profils de puissance (Pmax_y) pour lesquels le nombre de scenarii d'occupation non-valables ne dépasse pas un seuil (m) prédéfini.

2. Procédé selon la revendication 1, **caractérisé en ce que** la puissance disponible est répartie de manière égale à tous les véhicules électriques (VE) connectés.

3. Procédé selon la revendication 1, **caractérisé en ce que** la puissance disponible est répartie en tenant compte de la durée de connexion de chaque véhicule électrique (VE).

4. Procédé selon l'une des revendications 1 à 3, **caractérisé en ce que** chaque profil de puissance est défini à partir d'un jeu de paramètres de dimension déterminée.

5. Procédé selon l'une des revendications 1 à 4, **caractérisé en ce que** la sélection du profil de puissance est réalisée en tenant compte d'un indice de performance.

6. Procédé selon la revendication 5, **caractérisé en ce que** l'indice de performance est lié à une minimisation de l'erreur de prédiction de consommation.

7. Procédé selon la revendication 5, **caractérisé en ce que** l'indice de performance est lié à la limitation de l'amplitude maximale du profil de puissance.

8. Système de gestion en énergie d'une station de recharge (1) de véhicules électriques (VE), ladite station de recharge comportant plusieurs bornes de recharge (Bx), ledit système étant **caractérisé en ce qu'**il comporte :

   - Un module de détermination pour la station de recharge (1) d'un modèle statistique (Lstat) d'occupation de ladite station (1),
   - Un module de détermination de scenarii (SC) d'occupation de la station de recharge répondant audit modèle statistique d'occupation déterminé,
   - Un module de détermination de plusieurs profils de puissance (Pmax_y) à appliquer à la station de recharge (1), chaque profil de puissance étant échantillonné sur plusieurs plages horaires successives d'une période temporelle (T) prédéfinie,
- Un module d'application de chaque profil de puissance (Pmax_y) à chaque scenario (SC) d'occupation identifié, en répartissant la puissance disponible à chaque plage horaire du profil de puissance sur les véhicules électriques (VE) connectés à la station de recharge (1) sur ladite plage horaire,
- Pour chaque profil de puissance (Pmax_y) appliqué à un scénario d'occupation déterminé, un module de comparaison d'un taux de satisfaction obtenu par rapport à un seuil (S) prédéfini, ledit taux de satisfaction étant déterminé en tenant compte d'un niveau de charge final obtenu et d'une durée de connexion de chaque véhicule électrique (VE) en vue d'une recharge, en vue de déterminer si le scénario d'occupation est valable,
- Un module de sélection d'un profil de puissance optimal (Pmax_opt) choisi parmi les profils de puissance (Pmax_y) pour lesquels le nombre de scénarios non-valables ne dépasse pas un seuil (m) prédéfini.

**Fig. 1**

**Fig. 2**

**Fig. 3**

**Europäisches Patentamt**
**European Patent Office**
**Office européen des brevets**

## RAPPORT DE RECHERCHE EUROPEENNE

Numéro de la demande

EP 16 19 8602

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2014/167678 A1 (GUILLOU HERVÉ [FR] ET AL) 19 juin 2014 (2014-06-19) * page 2, alinéa 37 - page 4, alinéa 73 * ----- | 1-8 | INV. G06Q10/06 B60L11/18 H02J7/00 |
| X | US 2014/340038 A1 (TOGGENBURGER PASCAL [FR]) 20 novembre 2014 (2014-11-20) * page 2, alinéa 24 - page 5, alinéa 87 * * figures * ----- | 1-8 | |
| X | US 2015/145478 A1 (SUN HONGBIN [CN] ET AL) 28 mai 2015 (2015-05-28) * page 2, alinéa 19 - page 5, alinéa 47 * ----- | 1-8 | |

DOMAINES TECHNIQUES RECHERCHES (IPC)

G06Q
B60L
H02J

Le présent rapport a été établi pour toutes les revendications

| Lieu de la recherche | Date d'achèvement de la recherche | Examinateur |
|---|---|---|
| La Haye | 29 mars 2017 | Rachkov, Vassil |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 19 8602

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2017

| Document brevet cité au rapport de recherche | Date de publication | Membre(s) de la famille de brevet(s) | Date de publication |
|---|---|---|---|
| US 2014167678 A1 | 19-06-2014 | BR 112014001941 A2<br>EP 2737591 A2<br>FR 2978626 A1<br>JP 2014523230 A<br>US 2014167678 A1<br>WO 2013014238 A2 | 21-02-2017<br>04-06-2014<br>01-02-2013<br>08-09-2014<br>19-06-2014<br>31-01-2013 |
| US 2014340038 A1 | 20-11-2014 | CA 2852527 A1<br>EP 2803523 A2<br>FR 3005792 A1<br>US 2014340038 A1 | 16-11-2014<br>19-11-2014<br>21-11-2014<br>20-11-2014 |
| US 2015145478 A1 | 28-05-2015 | CN 104064829 A<br>US 2015145478 A1 | 24-09-2014<br>28-05-2015 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104064829 A
- CN 103400203 A
- CN 202256537 U
- US 8232763 B1